# EUROPEAN PATENT APPLICATION

(11) **EP 4 700 588 A1**
(43) Date of publication of application: **25.02.2026**
(21) Application number: 23950052.3
(22) Date of filing: 28.08.2023
(51) Int. Cl.: G06F 12/02

(54) **MEMORY RECOVERY METHOD AND ELECTRONIC DEVICE**

(71) Applicant: Honor Device Co., Ltd., Shenzhen, Guangdong 518040 (CN)
(72) Inventor: WANG, Xin, Shenzhen, Guangdong 518040 (CN)
(74) Representative: Goddar, Heinz J.
(86) International application number: PCT/CN2023/115346
(87) International publication number: WO 2025/043458

(57) **Abstract**

This application provides a memory reclaim method and an electronic device, and relates to the field of storage technologies. In the method, memory supply efficiency can be improved, a lag phenomenon caused due to an excessively long memory application time can be reduced, and user experience can be improved. In the method, a target to-be-reclaimed memory amount may be determined based on urgency of a process and memory pressure. Higher urgency of the process or higher memory pressure indicates a smaller target to-be-reclaimed memory amount.

## Description

### TECHNICAL FIELD

This application relates to the field of storage technologies, and in particular, to a memory reclaim method and an electronic device.

### BACKGROUND

With continuous upgrade of various applications, the various applications have an increasing requirement for memory. However, a memory capacity of an electronic device is limited, and cannot support long-term occupation of memory resources by a large quantity of applications. Therefore, when there are insufficient memory resources, a kernel of the electronic device performs memory reclaim.

In the conventional technology, when there is insufficient remaining memory space, the kernel performs asynchronous reclaim. However, when current memory requirement pressure of a system is high, asynchronous memory reclaim usually cannot meet a service requirement, and therefore the kernel is triggered to perform synchronous reclaim. When the kernel performs synchronous reclaim, a process is blocked, that is, the kernel can allocate memory space to the process only after memory reclaim is completed. In this case, memory supply efficiency is low. This directly results in a slow application response, causing application lag and affecting user experience.

### SUMMARY

Embodiments of this application provide a memory reclaim method and an electronic device, to improve memory supply efficiency, reduce a lag phenomenon caused due to an excessively long memory application time, and improve user experience.

To achieve the foregoing objective, the following technical solutions are used in the embodiments of this application.

According to a first aspect, this application provides a memory reclaim method, applied to an electronic device. The method includes: reclaiming memory in a first memory reclaim manner based on a first memory reclaim parameter in response to a first event that triggers a first process to apply for memory; and reclaiming memory in a second memory reclaim manner based on a second memory reclaim parameter in response to a second event that triggers a second process to apply for memory. The first memory reclaim parameter includes a first target to-be-reclaimed memory amount, and the second memory reclaim parameter includes a second target to-be-reclaimed memory amount. When urgency of the first process is the same as urgency of the second process, and memory pressure corresponding to the first memory reclaim manner is higher than memory pressure corresponding to the second memory reclaim manner, the first target to-be-reclaimed memory amount is less than the second target to-be-reclaimed memory amount; or when urgency of the first process is higher than urgency of the second process, and the first memory reclaim manner is the same as the second memory reclaim manner, the first target to-be-reclaimed memory amount is less than the second target to-be-reclaimed memory amount.

When the urgency of the first process is the same as the urgency of the second process, and the memory pressure corresponding to the first memory reclaim manner is higher than the memory pressure corresponding to the second memory reclaim manner, the first target to-be-reclaimed memory amount is less than the second target to-be-reclaimed memory amount, which indicates that higher memory pressure corresponding to a target memory reclaim manner indicates a smaller target to-be-reclaimed memory amount. In this way, for a synchronous memory manner, there may be a relatively small target to-be-reclaimed memory amount, so that a kernel may more quickly exit a memory reclaim procedure to allocate memory space to a process of an application for running use of the application, thereby alleviating an application lag phenomenon caused due to slow memory supply. For an asynchronous memory reclaim manner, there may be a relatively large target to-be-reclaimed memory amount, so that sufficient memory may be provided to reduce a case in which the kernel performs synchronous reclaim, thereby alleviating an application lag phenomenon caused due to slow memory supply.

When the urgency of the first process is higher than the urgency of the second process, and the first memory reclaim manner is the same as the second memory reclaim manner, the first target to-be-reclaimed memory amount is less than the second target to-be-reclaimed memory amount, which indicates that higher urgency of a process indicates a smaller target to-be-reclaimed memory amount. Therefore, after a kernel uses a synchronous memory manner, a target to-be-reclaimed memory amount for a process with high urgency may be reduced, so that the kernel may more quickly exit a memory reclaim procedure to allocate memory space to a process of an application for running use of the application, thereby alleviating an application lag phenomenon caused due to slow memory supply.

In an implementation provided in the first aspect, the urgency of the first process is determined based on system status information and process status information. The system status information is used to indicate memory pressure, and the process status information is used to indicate a degree to which the first process affects user experience. The system status information includes at least one of information indicating whether the electronic device is performing garbage collection and information indicating whether there is a process contending for memory with the first process. The process status information includes at least one of a priority of the first process, whether the first process is a real-time process, and a type of the first process. The type of the first process includes a foreground process, a background process, and a foreground-related process, and the foreground-related process is a process that supports foreground process running.

In an implementation provided in the first aspect, when the system status information and the process status information meet a first condition, a target required memory amount is a first target required memory amount, and the first target required memory amount is less than or equal to a required memory amount of the first process; when the system status information and the process status information meet a second condition, a target required memory amount is a second target required memory amount, and the second target required memory amount is equal to a required memory amount of the first process; or when the system status information and the process status information meet a third condition, a target required memory amount is a third target required memory amount, and the third target required memory amount is greater than or equal to a required memory amount of the first process. Urgency of the first process when the system status information and the process status information meet the first condition is higher than urgency of the first process when the system status information and the process status information meet the second condition, and the urgency of the first process when the system status information and the process status information meet the second condition is higher than urgency of the first process when the system status information and the process status information meet the third condition.

That is, in a case of relatively high urgency, the target required memory amount may be reduced based on the required memory amount of the process; or in a case of relatively low urgency, the target required memory amount may be increased based on the required memory amount of the first process. This helps set different target required memory amounts based on urgency of a process, to meet requirements of processes with different urgency for memory supply efficiency.

In an implementation provided in the first aspect, the first condition includes: There is a process contending for memory with the first process; or the electronic device is performing garbage collection, the priority of the first process is higher than a preset priority, and the first process is a real-time process; or the first process is a foreground process, and the first process is a real-time process.

In an implementation provided in the first aspect, the second condition includes: The electronic device is performing garbage collection, the priority of the first process is higher than a preset priority, and the first process is not a real-time process; or the first process is a foreground process, and the first process is not a real-time process.

In an implementation provided in the first aspect, the third condition includes: The first process is a foreground-related process or a background process.

In an implementation provided in the first aspect, the memory reclaim parameter further includes a dirty page write-back flag bit. When the system status information and the process status information meet a fourth condition, the dirty page write-back flag bit is a first value. When the dirty page write-back flag bit is the first value, it indicates that no dirty page write-back operation is performed in a memory reclaim process. The fourth condition includes: There is a process contending for memory with the first process; or the electronic device is performing garbage collection, and the priority of the first process is higher than the preset priority; or the first process is a foreground process.

When the fourth condition is met, it indicates that the urgency of the first process is relatively high. In this case, the dirty page write-back flag bit is set to the first value, so that the electronic device may be made not to write back a dirty page in the memory reclaim process, to help improve memory reclaim efficiency.

In an implementation provided in the first aspect, the memory reclaim parameter further includes a reclaim mode. When the system status information and the process status information meet a fifth condition, the reclaim mode is a first mode. When the reclaim mode is the first mode, the electronic device does not continue to reclaim memory when an actual reclaimed memory amount is greater than or equal to the target to-be-reclaimed memory amount. The fifth condition includes: There is a process contending for memory with the first process; or the electronic device is performing garbage collection, and the priority of the first process is higher than the preset priority.

When the fifth condition is met, it indicates that the urgency of the first process is relatively high. In this case, the reclaim mode is set to the first mode, so that the electronic device may more easily exit a reclaim procedure, to shorten a memory reclaim time and help improve memory supply efficiency.

In an implementation provided in the first aspect, the system status information includes a quantity of file pages, and the memory reclaim parameter further includes a file page flag bit. When the quantity of file pages is less than or equal to a first numerical value, the file page flag bit is a second value. When the file page flag bit is the second value, it indicates that an anonymous page is preferentially reclaimed in the memory reclaim process.

It may be understood that when the quantity of file pages is less than or equal to the first numerical value, the file page flag bit is set to the second value, so that the electronic device may preferentially reclaim an anonymous page in the memory reclaim process, to balance quantities of anonymous pages and file pages.

In an implementation provided in the first aspect, the reclaiming memory in a first memory reclaim manner based on a first memory reclaim parameter in response to a first event that triggers a first process to apply for memory includes: obtaining the required memory amount of the first process in response to the first event that triggers the first process to apply for memory; determining the first memory reclaim manner from a plurality of memory reclaim manners based on the required memory amount of the first process and remaining memory space, where the plurality of memory reclaim manners correspond to different memory pressure; and reclaiming memory in the first memory reclaim manner based on the first memory reclaim parameter.

According to a second aspect, this application provides a memory reclaim method, applied to an electronic device. The method includes: obtaining a required memory amount of a first process; determining a target memory reclaim manner from a plurality of memory reclaim manners based on remaining memory space and the required memory amount of the first process, where the plurality of memory reclaim manners correspond to different memory pressure; and reclaiming memory in the target memory reclaim manner based on a memory reclaim parameter, where the memory reclaim parameter includes a target to-be-reclaimed memory amount, higher memory pressure corresponding to the target memory reclaim manner indicates a smaller target to-be-reclaimed memory amount, and higher urgency of the first process indicates a smaller target to-be-reclaimed memory amount.

In an implementation provided in the second aspect, the urgency of the first process is determined based on system status information and process status information. The system status information is used to indicate memory pressure, and the process status information is used to indicate a degree to which the first process affects user experience. The system status information includes at least one of information indicating whether a system is performing garbage collection and information indicating whether there is a process contending for memory with the first process. The process status information includes at least one of a priority of the first process, whether the first process is a real-time process, and a type of the first process. The type of the first process includes a foreground process, a background process, and a foreground-related process, and the foreground-related process is a process that supports foreground process running.

According to a third aspect, this application provides an electronic device. The electronic device includes a storage and a processor. The processor is coupled to the storage. The storage is configured to store computer program code, and the computer program code includes computer instructions. When the computer instructions are executed by the processor, the electronic device is enabled to perform the method provided in any one of the first aspect, the second aspect, and the implementations thereof.

According to a fourth aspect, this application provides a computer-readable storage medium, including computer instructions. When the computer instructions are run on an electronic device, the electronic device is enabled to perform the method provided in any one of the first aspect, the second aspect, and the implementations thereof.

According to a fifth aspect, this application provides a computer program product. When the computer program product runs on an electronic device, the electronic device is enabled to perform the method provided in any one of the first aspect, the second aspect, and the implementations thereof.

For technical effects brought by any implementation of the second aspect to the fifth aspect, refer to the technical effects brought by different implementations of the first aspect. Details are not described herein again.

### BRIEF DESCRIPTION OF DRAWINGS

FIG. 1 is a diagram of a memory reclaim procedure according to a related technology;
FIG. 2 is a diagram of a hardware structure of an electronic device according to an embodiment of this application;
FIG. 3 is a block diagram of a software structure of an electronic device according to an embodiment of this application;
FIG. 4 is a schematic flowchart 1 of a memory reclaim method according to an embodiment of this application;
FIG. 5A and FIG. 5B are a schematic flowchart 2 of a memory reclaim method according to an embodiment of this application;
FIG. 6A, FIG. 6B, and FIG. 6C are a schematic flowchart 3 of a memory reclaim method according to an embodiment of this application;
FIG. 7A, FIG. 7B, and FIG. 7C are a schematic flowchart 4 of a memory reclaim method according to an embodiment of this application; and
FIG. 8A, FIG. 8B, and FIG. 8C are a schematic flowchart 5 of a memory reclaim method according to an embodiment of this application.

### DESCRIPTION OF EMBODIMENTS

The following describes technical solutions in embodiments of this application with reference to accompanying drawings in the embodiments of this application. In descriptions of the embodiments of this application, terms used in the following embodiments are only intended to describe particular embodiments, and are not intended to limit this application. As used in this specification and the appended claims of this application, singular expressions "a", "the", "the foregoing", and "this" are also intended to include an expression such as "one or more", unless otherwise clearly specified in the context. It should be further understood that in the following embodiments of this application, "at least one" and "one or more" mean one or at least two (including two). The term "and/or" is used to describe an association relationship between associated objects, and indicates that three relationships may exist. For example, "A and/or B" may indicate the following cases: Only A exists, both A and B exist, and only B exists, where A and B may be singular or plural. The character "/" usually indicates an "or" relationship between associated objects.

As described in this specification, referring to "one embodiment", "some embodiments", or the like means that one or more embodiments of this application include particular features, structures, or characteristics described with reference to the embodiment. Therefore, statements such as "in one embodiment", "in some embodiments", or "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specially emphasized in other manners. The term "connection" includes a direct connection and an indirect connection, unless otherwise specified. The terms "first" and "second" are used merely for the purpose of description, and should not be construed as indicating or implying relative importance or implicitly indicating a quantity of indicated technical features.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the words such as "example" or "for example" is intended to present related concepts in a specific manner.

The memory reclaim method provided in this application may be used in a memory reclaim scenario of an electronic device. The electronic device provided in the embodiments of this application may be a device, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device and/or a smart city device. A specific type of the electronic device is not specifically limited in the embodiments of this application.

In some related technologies, the electronic device may set a memory watermark. When it is detected that remaining memory space is less than a low (low) level in the memory watermark, asynchronous memory reclaim is triggered, for example, application killing, memory compression, and file page cleaning are performed. However, in an actual use process, in some scenarios that require a relatively large amount of memory, for example, a start scenario of an application, a photographing/recording scenario, or a battle or a match in a game application, the remaining memory space cannot meet an application requirement, and therefore a kernel usually needs to perform synchronous memory reclaim. However, synchronous memory reclaim blocks a process, that is, the kernel needs to complete memory reclaim before allocating memory to a process of an application, resulting in a problem of application lag.

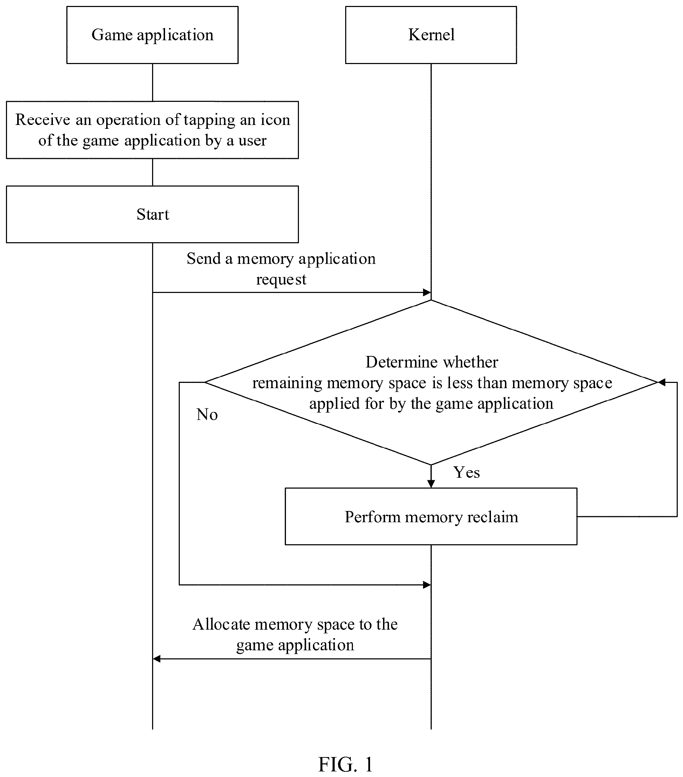

For example, a start scenario of a game application is used as an example. As shown in FIG. 1, an electronic device may receive an operation of tapping an icon of the game application by a user. In response to the operation, the game application is started. Specifically, after detecting the operation of tapping the icon of the game application by the user, a home screen of the electronic device may start the game application through an operating system of the electronic device (which may be understood as launching a process of the game application). Then, the game application may send a memory application request to a kernel of the electronic device. The memory application request carries a memory space size applied for by the game application. After receiving the memory application request, the kernel may determine whether remaining memory space of the electronic device is less than the memory space applied for by the game application. When the remaining memory space is less than the memory space applied for by the game application, the kernel performs synchronous memory reclaim until the remaining memory space is greater than or equal to the memory space applied for by the game application. When the remaining memory space is greater than or equal to the memory space applied for by the game application, the kernel allocates memory space to the game application, to provide memory space for starting the game application, so that the game application can be successfully started.

It may be learned that when the kernel performs synchronous memory reclaim, a longer time spent by the kernel to reclaim memory indicates a lower speed at which the kernel meets a memory requirement of the application and more noticeable application lag, severely affecting user experience.

In view of this, this application provides a memory reclaim method. For a memory reclaim manner of synchronous reclaim, a target to-be-reclaimed memory amount is reduced, so that a kernel may more quickly exit a memory reclaim procedure to allocate memory space to a process of an application for running use of the application, thereby alleviating an application lag phenomenon caused due to slow memory supply. For a memory reclaim manner of asynchronous reclaim, a target to-be-reclaimed memory amount is increased, so that sufficient memory is provided to reduce a case in which the kernel enters a synchronous reclaim procedure, thereby alleviating an application lag phenomenon caused due to slow memory supply.

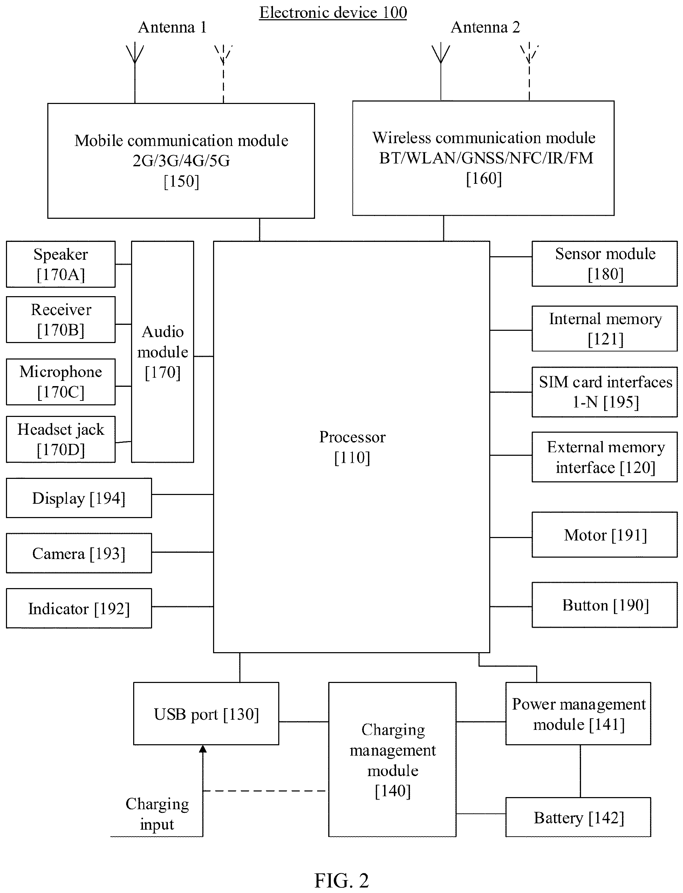

FIG. 2 is a diagram of a hardware structure of an electronic device 100 according to an embodiment of this application. As shown in FIG. 2, the electronic device 100 includes a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent devices, or may be integrated into one or more processors. The processor 110 may be a nerve center and a command center of the electronic device 100. The processor 110 may generate an operation control signal based on instruction operation code and a timing signal, to complete control of instruction fetching and instruction execution.

In this embodiment of this application, the processor 110 may perform memory reclaim.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor 110 may directly invoke the instructions or the data from the storage. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules shown in this embodiment is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The external memory interface 120 may be configured to be connected to an external memory card such as a Micro SD card, to expand a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the executable program code includes instructions. The processor 110 runs the instructions stored in the internal memory 121, to perform various functional applications and data processing of the electronic device 100. For example, in this embodiment of this application, the processor 110 may execute the instructions stored in the internal memory 121, and the internal memory 121 may include a program storage area and a data storage area.

The program storage area may store an operating system, an application required by at least one function (for example, a recent task management function), and the like. The data storage area may store data created in a use process of the electronic device 100, for example, may include a memory requirement of an application, remaining memory space, and the like. In addition, the internal memory 121 may include a high-speed random access memory, and may further include a nonvolatile memory, for example, at least one magnetic disk storage device, a flash memory device, or a universal flash storage (universal flash storage, UFS). In this embodiment of this application, memory space to be reclaimed by a kernel is memory space of the internal memory 121.

It may be understood that the structure shown in this embodiment does not constitute a specific limitation on the electronic device 100. In some other embodiments, the electronic device 100 may include more or fewer components than those shown in the figure, some components may be combined, some components may be split, or components may be arranged in different manners. The components shown in the figure may be implemented by hardware, software, or a combination of software and hardware.

In addition, an operating system runs on the foregoing components, for example, an Android^{®} open source operating system, a Windows^{®} operating system, or an IOS^{®} operating system. This is not specifically limited herein. An application may be installed and run on the operating system.

An operating system of the electronic device 100 may use a layered architecture, an event-driven architecture, a microkernel architecture, a microservice architecture, or a cloud architecture. In embodiments of this application, a layered architecture of an Android^{®} system is used as an example to describe a software structure of the electronic device 100. In the layered architecture, software is divided into several layers, and each layer has a clear role and task. The layers communicate with each other through software interfaces.

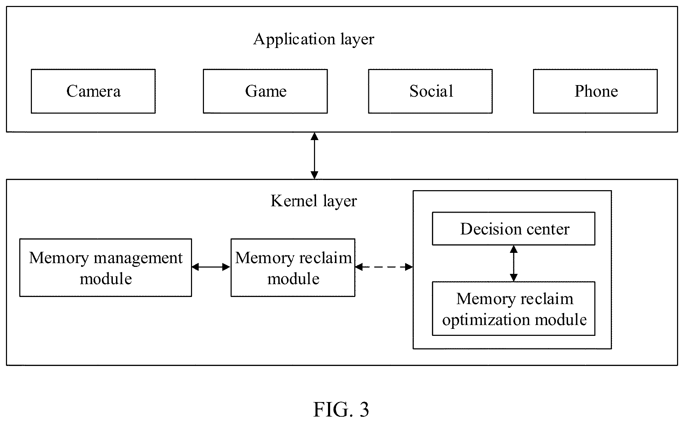

FIG. 3 is a block diagram of a software structure of a terminal device according to an embodiment of this application. The software structure includes an application layer and a kernel layer (kernel) (which is briefly referred to as a kernel in the following embodiments).

The application layer may include a series of application packages. As shown in FIG. 3, the applications may include Camera, Games, Social, Phone, and another application.

The kernel layer is a layer between hardware and software, and provides interaction with the hardware. In this embodiment of this application, as shown in FIG. 3, the kernel layer includes a memory management module, a memory reclaim module, a decision center, and a memory reclaim optimization module.

The memory management module is configured to determine a target memory reclaim manner. For descriptions of the memory reclaim manner, refer to related content in S402. This is not described herein.

The decision center is configured to: obtain system status information and process status information, determine a memory reclaim parameter based on the system status information and the process status information, and the like. For the system status information, the process status information, and a detailed process of determining the memory reclaim parameter, refer to related content in S403 in the following. This is not described herein.

The memory reclaim module is configured to perform memory reclaim based on the memory reclaim parameter.

The memory reclaim optimization module is configured to: transmit data to the decision center and the memory reclaim module, determine whether to continue to reclaim memory, and the like.

It should be noted that the memory reclaim optimization module and the decision center may be kernel objects (kernel object), for example, dynamic link files used by the kernel, and may also be referred to as ko files because a suffix of the dynamic link file is ".ko".

The dynamic link files of the memory reclaim optimization module and the decision center may be separated from a native module (for example, the memory management module and the memory reclaim module) of the kernel, and the native module of the kernel is lined to the dynamic link files (that is, the memory reclaim optimization module and the decision center) by using a hook (hook) mechanism.

The hook mechanism is a technology for changing a program running procedure. For example, if a normal program running procedure is A->B->C, the program running procedure may be changed to A->D->B->C by using the hook mechanism, where D is a newly added program. In this process, D may obtain data transferred by A to B, modify or use the data, and then transfer the data to B, and A and B do not perceive this process. Therefore, use of the hook mechanism can reduce impact on an original program of the kernel, and optimize a memory reclaim process.

It should be further noted that the software architecture shown in FIG. 3 shows only some layers. The operating system may further include more layers than those shown in FIG. 3, for example, an application framework layer (framework) and a hardware abstraction layer (hardware abstraction layer, HAL). This is not specifically limited herein.

The memory reclaim method provided in the embodiments of this application is described below with reference to the accompanying drawings.

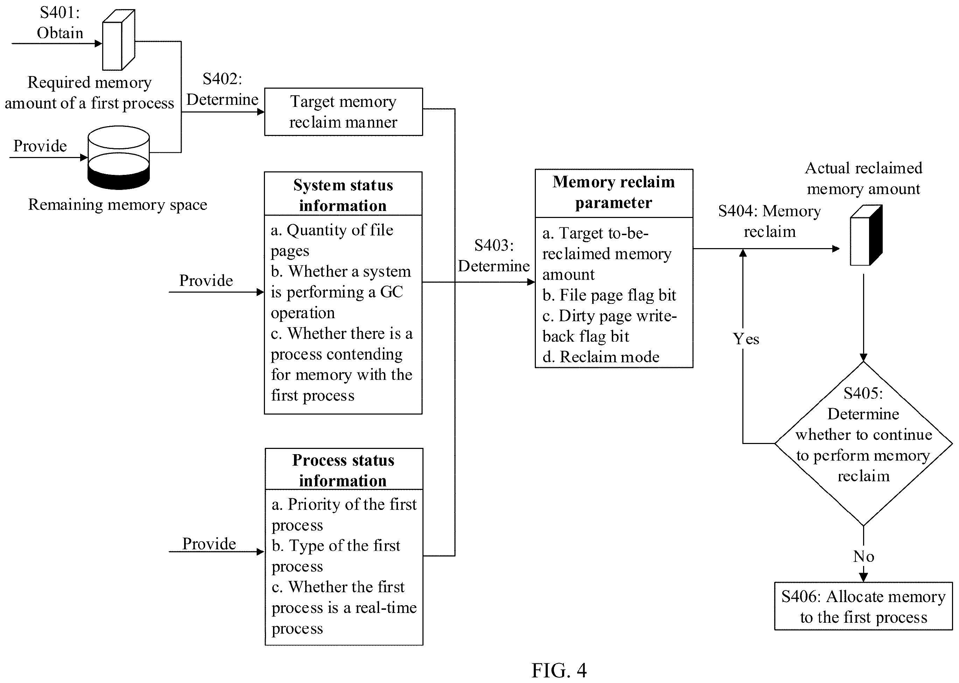

FIG. 4 is a schematic flowchart 1 of a memory reclaim method according to an embodiment of this application. The memory reclaim method may be performed by the electronic device 100 shown in FIG. 2. As shown in FIG. 4, the memory reclaim method includes the following steps.

S401: Obtain a required memory amount of a first process in response to a first event that triggers the first process to apply for memory.

The first event is any event that triggers the first process to apply for memory, and different first processes correspond to different first events. For example, the first process may be a process of any application, and the first event may be a start event of the application. For another example, the first process is a process of a game application, and the first event may be an event that the game application switches to an interface that requires a large amount of rendering. For another example, the first process is a process of a camera application, and the first event may be an event of recording/capturing an image by the camera application.

The required memory amount refers to a size of memory space required by the first process under action of the first event. In an optional implementation, the electronic device 100 may obtain the required memory amount of the first process after the first process of the electronic device 100 is launched. For example, after the first process is launched, the first process may send a memory application request to a kernel of the electronic device 100, where the memory application request carries the required memory amount of the first process.

S402: Determine a target memory reclaim manner based on remaining memory space and the required memory amount of the first process.

There may be three types of memory reclaim manners: a memory reclaim manner using a kernel swap daemon process (kernel swap daemon process, kswapd) (which is briefly referred to as a kswapd memory reclaim manner), a direct memory reclaim (direct reclaim) manner, and another memory reclaim manner. The another memory reclaim manner is, for example, an OOM (out of memory, out of memory) killer mechanism.

All of the three memory reclaim manners may be used for memory reclaim, and different memory reclaim manners exert different impact on a memory supply speed. The kswapd memory reclaim manner is asynchronous reclaim, does not block a process, exerts relatively small impact on the memory supply speed, and exerts relatively small impact on a response speed of an application. The direct memory reclaim manner and the another memory reclaim manner are synchronous reclaim, block a process, severely affect the memory supply speed, and exert relatively significant impact on a response speed of an application.

In addition, trigger occasions of different memory reclaim manners are different. Trigger occasions of different memory reclaim manners are related to current memory pressure of a system. When there is relatively low memory pressure, the electronic device may use the kswapd memory reclaim manner. When there is relatively high memory pressure, the electronic device uses the direct memory reclaim manner. If there is still relatively high memory pressure after memory reclaim is performed in the direct memory reclaim manner, the electronic device may use the another memory reclaim manner.

In this embodiment of this application, the electronic device may evaluate the current memory pressure of the system based on the remaining memory space and the required memory amount of the first process. If the remaining memory space is less than the required memory amount, it indicates that the remaining memory space cannot meet an application requirement, and the current memory pressure of the system is relatively high, and therefore it is determined that the target memory reclaim manner is the direct memory reclaim manner.

If the remaining memory space is greater than or equal to the required memory amount, the electronic device may further evaluate the current memory pressure of the system based on a memory watermark interval within which the remaining memory space falls. The memory watermark interval is obtained through classification by using a memory watermark low and a memory watermark min, and the memory watermark low is greater than the memory watermark min.

If the remaining memory space is greater than or equal to the memory watermark min and is less than the memory watermark low (that is, the memory watermark low≥the remaining memory space≥the memory watermark min), it indicates that the current memory pressure of the system is relatively low, and therefore it is determined that the target memory reclaim manner is the kswapd memory reclaim manner.

If the remaining memory space is less than the memory watermark min (that is, the remaining memory space<the memory watermark min), it indicates that the current memory pressure of the system is relatively high, and it is determined that the target memory reclaim manner is the direct memory reclaim manner.

If the remaining memory space is still less than the memory watermark min after the electronic device 100, for example, the kernel of the electronic device 100, performs memory reclaim in the direct memory reclaim manner, it indicates that the current memory pressure of the system is very high, and it is determined that the target memory reclaim manner is the another memory reclaim manner, for example, the OOM memory reclaim manner.

It should be noted that if the remaining memory space is greater than the memory watermark low, the kernel does not need to perform memory reclaim.

S403: Determine a memory reclaim parameter based on system status information, process status information, and the target memory reclaim manner.

In this embodiment of this application, the system status information includes information that reflects a memory status, for example, a quantity of file pages, information about whether the electronic device, for example, an operating system of the electronic device, is performing a garbage collection (garbage collection, GC) operation, and information about whether there is a process contending for memory with the first process.

The process status information may include information that reflects a degree to which the first process affects user experience, for example, a priority of the first process, whether the first process is a real-time process, and a type of the first process.

A higher priority of the first process or the first process being a real-time process indicates a higher degree to which a response speed of the first process affects the user experience.

The type of the first process includes a foreground process, a background process, and a foreground-related process. The foreground process is a process in which a user can interact by using a device. The foreground-related process is a process that supports foreground process running. The background process is a process that is not perceived by the user and does not run in the foreground of the device, and does not need to interact with the user. Therefore, it may be learned that impact of the foreground process, the foreground-related process, and the background process on the user experience successively decreases.

The memory reclaim parameter includes a target to-be-reclaimed memory amount, a file page flag bit, a dirty page write-back flag bit, a reclaim mode, and the like.

The target to-be-reclaimed memory amount refers to memory space that needs to be reclaimed by the kernel. It may be understood that a smaller target to-be-reclaimed memory amount indicates a shorter memory reclaim time and a higher speed at which the kernel allocates memory to a process, that is, higher memory supply efficiency. The memory reclaim time may be a time required by the electronic device 100, for example, the kernel of the electronic device 100, to perform memory reclaim. For example, the memory reclaim time is a time required from when the kernel starts to perform S404 to when the kernel determines not to continue to reclaim memory. For another example, the memory reclaim time is a time required from when the kernel receives the memory application request from the first process to when the kernel allocates memory to the first process.

The file page flag bit is used to indicate the quantity of file pages. In this embodiment of this application, the quantity of file pages may be marked by using a value of the file page flag bit. For example, the value of the file page flag bit may be tiny or null. When the file page flag bit is tiny, it indicates an excessively small quantity of file pages. When the file page flag bit is null, it indicates a sufficient quantity of file pages. It may be understood that when there is an excessively small quantity of file pages, only a relatively small amount of memory space can be reclaimed even if the kernel releases all file pages. Therefore, the kernel preferentially reclaims an anonymous page. This helps improve memory reclaim efficiency and reduce the memory reclaim time.

The dirty page write-back flag bit is used to indicate whether a dirty page can be written back. In this embodiment of this application, whether a dirty page can be written back may be marked by using a value of the file page flag bit. For example, a value of the dirty page write-back flag bit may be true or false. When the dirty page write-back flag bit is true, it indicates that the kernel can write back a dirty page in the memory reclaim process. When the dirty page write-back flag bit is false, it indicates that the kernel cannot write back a dirty page in the memory reclaim process. It may be understood that if the kernel cannot write back a dirty page in the memory reclaim process, an I/O operation caused by writing back a dirty page may be reduced. This helps improve memory reclaim efficiency and reduce the memory reclaim time.

The reclaim mode is one of parameters used to determine whether the kernel continues to reclaim memory after completing one round of memory reclaim. In this embodiment of this application, the reclaim mode may include a first mode and a second mode. When other parameters used to determine whether the kernel continues to reclaim memory after completing one round of memory reclaim are the same, it may be easier in the first mode to enable the kernel not to continue to reclaim memory than in the second mode, to reduce the memory reclaim time. For a process in which the kernel determines, based on the reclaim mode and another parameter, whether to continue to reclaim memory, refer to S405. This is not described herein.

In this embodiment of this application, the electronic device prestores memory optimization strategies corresponding to the three types of memory reclaim manners. The electronic device 100, for example, the kernel of the electronic device 100, may determine a target memory optimization strategy based on the target memory reclaim manner, and then obtain the memory reclaim parameter based on the system status information, the process status information, and the target memory optimization strategy.

Each memory optimization strategy includes a correspondence among system status information, process status information, and a memory reclaim parameter. In this embodiment of this application, the system status information and the process status information may be used to evaluate urgency of obtaining memory by the first process, and the memory reclaim parameter may affect the memory reclaim time. Each memory optimization strategy meets: Higher urgency of obtaining memory by the first process indicates higher memory reclaim efficiency and a shorter memory reclaim time. In addition, each memory optimization strategy may be used to balance quantities of anonymous pages, file pages, and slab caches.

The correspondence among the system status information, the process status information, and the memory reclaim parameter is described below by using a memory optimization strategy corresponding to the direct memory reclaim manner as an example.

In an optional implementation, the kernel may determine whether the quantity of file pages is less than a first numerical value. If the quantity of file pages is less than or equal to the first numerical value, the file page flag bit is tiny (which may also be referred to as a second value). If the quantity of file pages is greater than the first numerical value, the file page flag bit is null. When the file page flag bit is tiny, the kernel preferentially reclaims an anonymous page in the memory reclaim process, to balance quantities of anonymous pages and file pages.

The kernel may further determine another memory reclaim parameter based on the system status information and/or the process status information. The determining a memory reclaim parameter based on system status information and process status information may include the following several cases:
(1) If there is a process contending for memory with the first process, the reclaim mode is the first mode, the dirty page write-back flag bit is false (which may also be referred to as a first value), and the target to-be-reclaimed memory amount is a smaller value in the required memory amount and a preset first memory amount.
   It may be understood that when there is a process contending for memory with the first process, it indicates that currently another process is waiting to apply for memory. To enable the another process to apply for memory as quickly as possible, the kernel needs to exit a memory reclaim procedure as quickly as possible, to allocate memory to the first process as quickly as possible. The dirty page write-back flag bit is set to false, so that the kernel may be made not to write back a dirty page in the memory reclaim process, to improve memory reclaim efficiency of the kernel. In addition, the target to-be-reclaimed memory amount is set to the smaller value in the required memory amount and the first memory amount, to reduce the to-be-reclaimed memory amount, so as to reduce a time required for memory reclaim. That is, when there is a process contending for memory with the first process, the dirty page write-back flag bit is set to false, and the to-be-reclaimed memory amount is reduced. This can avoid excessive reclaim, and can reduce the memory reclaim time, so that the kernel exits the memory reclaim procedure as quickly as possible, to more quickly allocate memory to the first process, so as to reduce a problem that the first process and another process lag due to slow memory supply.
(2) If the priority of the first process is higher than a preset priority, the system is performing a GC operation, and the first process is a real-time process, the reclaim mode is the first mode, the dirty page write-back flag bit is false, and the target to-be-reclaimed memory amount is a smaller value in the required memory amount and a second memory amount, where the second memory amount is greater than the first memory amount.
   It may be understood that if the priority of the first process is higher than the preset priority, it indicates that the first process exerts relatively significant impact on the user experience. If the system is performing a GC operation, it indicates that the memory pressure of the system is relatively high. In addition, if the first process is a real-time process, it indicates that the process is urgent and needs to respond to an external event very quickly. Therefore, the dirty page write-back flag bit is set to false, to improve memory reclaim efficiency by reducing an I/O operation. The target to-be-reclaimed memory amount is set to the smaller value in the required memory amount and the second memory amount, to reduce the to-be-reclaimed memory amount, so as to reduce a time required for memory reclaim. In this way, the kernel can exit the memory reclaim procedure as quickly as possible, to more quickly allocate memory to the first process, so as to reduce a problem that the first process and another process lag due to slow memory supply. In addition, a reduction in the to-be-reclaimed memory amount may further avoid excessive memory reclaim.
(3) If the priority of the first process is higher than a preset priority, the system is performing a GC operation, and the first process is not a real-time process, the reclaim mode is the first mode, and the dirty page write-back flag bit is false. In this case, the target to-be-reclaimed memory amount is the required memory amount of the first process.
(4) If the first process is a foreground process, and the first process is a real-time process, the reclaim mode is the second mode, the dirty page write-back flag bit is false, and the target to-be-reclaimed memory amount is a smaller value in the required memory amount and a second memory amount, where the second memory amount is greater than the first memory amount.
   It may be understood that if the first process is a foreground process, it indicates that the first process exerts relatively significant impact on the user experience. If the first process is a real-time process, it indicates that the process is urgent and needs to respond to an external event very quickly. Therefore, the kernel sets the dirty page write-back flag bit to false and reduces the to-be-reclaimed memory amount, to quickly exit the memory reclaim procedure.
(5) If the first process is a foreground process, and the first process is not a real-time process, the reclaim mode is set to the second mode, and the dirty page write-back flag bit is false. In this case, the target to-be-reclaimed memory amount is not adjusted, and the target to-be-reclaimed memory amount is the required memory amount of the first process.
(6) If the first process is a foreground-related process, the reclaim mode is set to a third mode, and the target to-be-reclaimed memory amount is a larger value in the required memory amount and a third memory amount, where the third memory amount is greater than the second memory amount.
   It may be understood that if the first process is a foreground-related process, it indicates that the first process exerts relatively small impact on the user experience. Therefore, the target to-be-reclaimed memory amount may be set to the larger value in the required memory amount and the third memory amount, to properly increase the to-be-reclaimed memory amount, so as to ensure that the kernel can reclaim sufficient memory space.
(7) If the first process is a background process, the reclaim mode is set to a third mode, the file page flag bit is tiny, and the target to-be-reclaimed memory amount may be a larger value in the required memory amount and a fourth memory amount, where the fourth memory amount is greater than the third memory amount.

It may be understood that if the first process is a background process, the first process affects the user experience to a very low degree. Therefore, the file page flag bit may be set to tiny, so that the kernel preferentially reclaims an anonymous page, thereby reducing an I/O operation. In addition, the target to-be-reclaimed memory amount is set to the larger value in the required memory amount and the fourth memory amount, to increase the to-be-reclaimed memory amount, so that the kernel can reclaim sufficient memory space.

The case (1) corresponds to urgency 1, the case (2) and the case (4) correspond to urgency 2, the case (3) and the case (5) correspond to urgency 3, the case (6) corresponds to urgency 4, and the case (7) corresponds to urgency 5. In addition, the urgency 1, the urgency 2, the urgency 3, the urgency 4, and the urgency 5 successively decrease.

A memory reclaim parameter corresponding to the case (1) is approximately the same as a memory reclaim parameter corresponding to the case (2). A difference lies in that a target to-be-reclaimed memory amount 1 corresponding to the case (1) is the smaller value in the required memory amount and the first memory amount, and a target to-be-reclaimed memory amount 2 corresponding to the case (2) is the smaller value in the required memory amount and the second memory amount. Because the second memory amount is greater than the first memory amount, the to-be-reclaimed memory amount 1 is less than or equal to the to-be-reclaimed memory amount 2. Therefore, a memory reclaim time corresponding to the case (1) is less than or equal to a memory reclaim time corresponding to the case (2).

The memory reclaim parameter corresponding to the case (2) is approximately the same as a memory reclaim parameter corresponding to the case (3). A difference lies in that the target to-be-reclaimed memory amount 2 corresponding to the case (2) is the smaller value in the required memory amount and the second memory amount, and a target to-be-reclaimed memory amount 3 corresponding to the case (3) is the required memory amount. Therefore, the target to-be-reclaimed memory amount 2 is less than or equal to the to-be-reclaimed memory amount 3. Therefore, the memory reclaim time corresponding to the case (2) is less than or equal to a memory reclaim time corresponding to the case (3).

The memory reclaim parameter corresponding to the case (1) is approximately the same as a memory reclaim parameter corresponding to the case (4). A difference lies in that the target to-be-reclaimed memory amount 1 corresponding to the case (1) is the smaller value in the required memory amount and the first memory amount, and a target to-be-reclaimed memory amount 4 corresponding to the case (4) is the smaller value in the required memory amount and the second memory amount. Because the second memory amount is greater than the first memory amount, the to-be-reclaimed memory amount 1 is less than or equal to the to-be-reclaimed memory amount 4. Therefore, the memory reclaim time corresponding to the case (1) is less than or equal to a memory reclaim time corresponding to the case (4).

The memory reclaim parameter corresponding to the case (4) is approximately the same as a memory reclaim parameter corresponding to the case (5). A difference lies in that the target to-be-reclaimed memory amount 4 corresponding to the case (4) is the smaller value in the required memory amount and the second memory amount, and a target to-be-reclaimed memory amount 5 corresponding to the case (5) is the required memory amount. Therefore, the target to-be-reclaimed memory amount 4 is less than or equal to the to-be-reclaimed memory amount 5. Therefore, the memory reclaim time corresponding to the case (4) is less than or equal to a memory reclaim time corresponding to the case (5).

A main difference between the memory reclaim parameter corresponding to the case (5) and a memory reclaim parameter corresponding to the case (6) lies in that the target to-be-reclaimed memory amount 5 corresponding to the case (5) is the required memory amount, and a target to-be-reclaimed memory amount 6 corresponding to the case (6) is the larger value in the required memory amount and the third memory amount; and the dirty page write-back flag bit is false in the case (5). Therefore, the to-be-reclaimed memory amount 5 is less than or equal to the to-be-reclaimed memory amount 6, and in the case (5), memory reclaim efficiency is improved because a dirty page does not need to be written back. Therefore, the memory reclaim time corresponding to the case (5) is less than or equal to a memory reclaim time corresponding to the case (6).

A main difference between the memory reclaim parameter corresponding to the case (6) and a memory reclaim parameter corresponding to the case (7) lies in that the target to-be-reclaimed memory amount 6 corresponding to the case (6) is the larger value in the required memory amount and the third memory amount, and a target to-be-reclaimed memory amount 7 corresponding to the case (7) is the larger value in the required memory amount and the fourth memory amount. Because the fourth memory amount is greater than the third memory amount, the to-be-reclaimed memory amount 6 is less than or equal to the to-be-reclaimed memory amount 7. In addition, the file page flag is tiny in the case (7), and therefore the kernel preferentially reclaims an anonymous page, which affects memory reclaim efficiency. Therefore, the memory reclaim time corresponding to the case (6) is less than or equal to a memory reclaim time corresponding to the case (7).

It should be noted that when the target memory reclaim manner is the kswapd memory reclaim manner or the another memory reclaim manner (for example, OOM), the kernel determines the memory reclaim parameter in a process similar to the foregoing process. A difference lies in that in a case of same system status information and same process status information, the three memory reclaim manners correspond to different target to-be-reclaimed memory amounts. The memory optimization strategies of the kswapd memory reclaim manner, the direct memory reclaim (direct reclaim) manner, and the another memory reclaim manner meet: In a case of same system status information and same process status information, target to-be-reclaimed memory amounts corresponding to the kswapd memory reclaim manner, the direct memory reclaim manner, and the OOM memory reclaim manner successively decrease, and memory reclaim times corresponding to the kswapd memory reclaim manner, the direct memory reclaim manner, and the OOM memory reclaim manner successively decrease.

For example, when the target memory reclaim manner is the kswapd memory reclaim manner, the following correspondence may exist in the memory optimization strategy: When the system status information and the process status information meet the case (1), the reclaim mode is the first mode, the dirty page write-back flag bit is set to false, and the target to-be-reclaimed memory amount is a smaller value in the required memory amount and a fifth memory amount, where the fifth memory amount is greater than the first memory amount.

It may be understood that because the fifth memory amount is greater than the first memory amount, when the system status information and the process status information meet the case (1), the target to-be-reclaimed memory amount (greater than or equal to the fifth memory amount) corresponding to the kswapd memory reclaim manner is greater than or equal to the target to-be-reclaimed memory amount (greater than or equal to the first memory amount) corresponding to the direct memory reclaim manner. In addition, because other memory reclaim parameters are consistent, the memory reclaim time corresponding to the kswapd memory reclaim manner is greater than the memory reclaim time corresponding to the direct memory reclaim manner.

For another example, when the system status information and the process status information meet the case (2), the reclaim mode is the first mode, the dirty page write-back flag bit is set to false, and the target to-be-reclaimed memory amount is a smaller value in the required memory amount and a sixth memory amount, where the sixth memory amount is greater than the second memory amount.

The target to-be-reclaimed memory amount in the kswapd memory reclaim manner is increased, so that more memory space can be reclaimed in the kswapd memory reclaim manner, to reduce a case in which the kernel performs a synchronous reclaim procedure, thereby alleviating an application lag phenomenon caused due to slow memory supply.

In another implementation, the kernel may further adjust other information in the memory reclaim parameter. This is not specifically limited herein, provided that a condition that the memory reclaim times corresponding to the kswapd memory reclaim manner, the direct memory reclaim manner, and the OOM memory reclaim manner successively decrease is met.

S404: Perform memory reclaim based on the memory reclaim parameter, to obtain an actual reclaimed memory amount.

In this embodiment of this application, the electronic device 100, for example, the kernel of the electronic device 100, may perform scanning in a sequence of a zone (zone), a node (node), and a memory control group (memory control group, memcg), and in a scanning process, determine the memory reclaim parameter based on the dirty page write-back flag bit, the file page flag bit, and the like, and release a memory page.

It may be understood that after the kernel scans all memcg groups, one round of memory reclaim is completed. S404 may be understood as a process of one round of memory reclaim. In one memory reclaim procedure, the kernel may perform at least one round of memory reclaim. The actual reclaimed memory amount may be a total amount of memory reclaimed by the kernel in all rounds of memory reclaim.

S405: Determine whether to continue to perform memory reclaim.

In this embodiment of this application, each time one round of memory reclaim is completed, the electronic device 100, for example, the kernel of the electronic device 100 may determine whether to continue to perform memory reclaim.

When the reclaim mode is the first mode, if the actual reclaimed memory amount is greater than or equal to the target to-be-reclaimed memory amount, the kernel does not continue to perform memory reclaim, and performs S406.

When the reclaim mode is the second mode, or the actual reclaimed memory amount is less than the target to-be-reclaimed memory amount, the kernel may further determine, based on a first memory reclaim exit mechanism, whether to continue to perform memory reclaim. The first memory reclaim exit mechanism is a native memory reclaim exit mechanism of the kernel, and is related to the actual reclaimed memory amount, the target to-be-reclaimed memory amount, whether a dirty page is written back in the reclaim process, whether write-back of a dirty page is completed, and the like. If the first memory reclaim exit mechanism is met, the kernel does not continue to perform memory reclaim, and performs S406. If the first memory reclaim exit mechanism is not met, the kernel continues to perform memory reclaim, and performs S404 again.

S406: Allocate memory to the first process based on the required memory amount.

After exiting the memory reclaim procedure, the kernel may allocate memory to the first process based on the required memory amount applied for by the first process, so that the first process performs a corresponding operation.

It may be learned that in this application, different to-be-reclaimed memory amounts may be respectively set for different memory reclaim manners, and higher memory pressure corresponding to the memory reclaim manner indicates a smaller to-be-reclaimed memory amount. In this way, more memory space can be reclaimed in the kswapd memory reclaim manner, to lower a probability of triggering the kernel to perform synchronous memory reclaim, and the kernel can quickly exit the memory reclaim procedure when performing synchronous memory reclaim, to quickly supply memory to a process of an application, thereby reducing an application lag phenomenon, and improving user experience.

In addition, in this application, a to-be-reclaimed memory amount is set with reference to system status information and process status information. The system status information and the process status information indicate that higher urgency of a process indicates a smaller to-be-reclaimed memory amount. In this way, the kernel can quickly exit the memory reclaim procedure, to supply memory to a process of an application as quickly as possible, thereby reducing an application lag phenomenon, and improving user experience.

The memory reclaim method provided in this application is further described below based on the software architecture shown in FIG. 3.

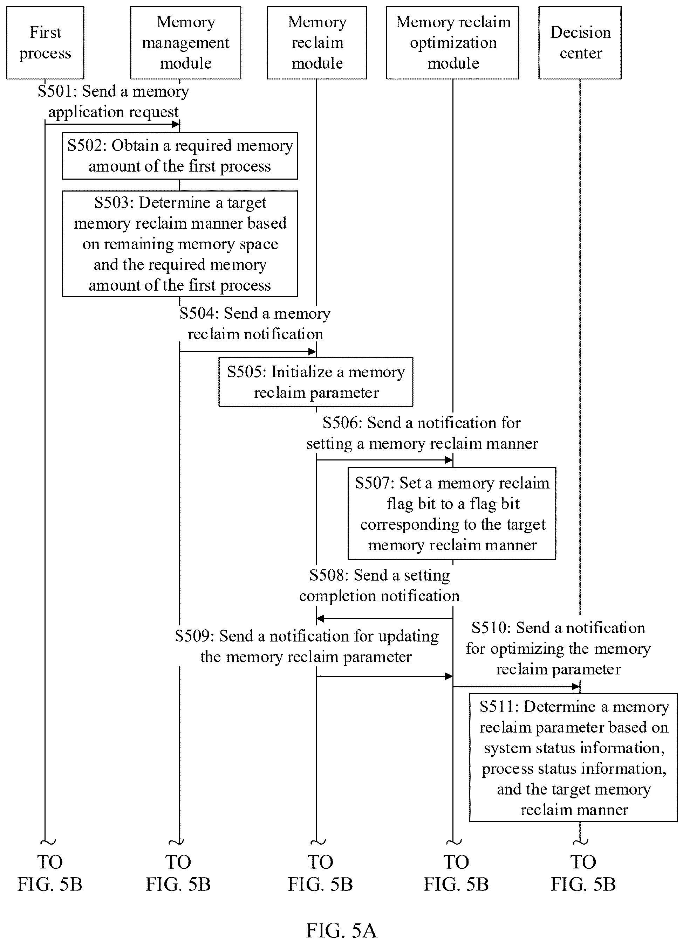

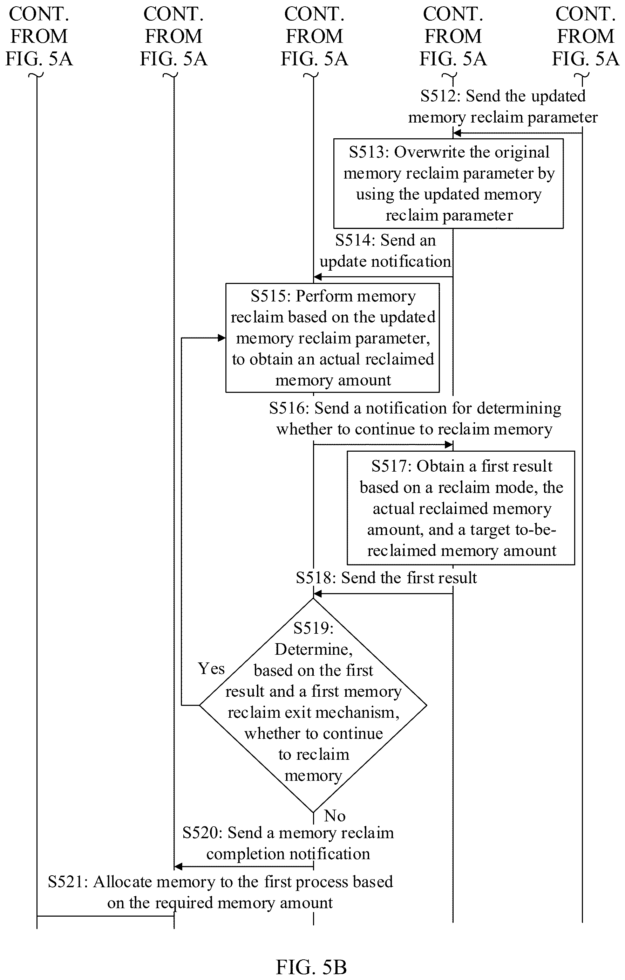

FIG. 5A and FIG. 5B are a schematic flowchart 2 of a memory reclaim method according to an embodiment of this application. As shown in FIG. 5A and FIG. 5B, the memory reclaim method provided in this embodiment of this application includes S501~S521.

S501: A first process sends a memory application request to a memory management module.

After being launched, the first process may send the memory application request to a kernel, where the memory application request carries a required memory amount of the first process.

S502: The memory management module obtains the required memory amount of the first process.

The memory management module may obtain the required memory amount of the first process from the memory application request.

S503: The memory management module determines a target memory reclaim manner based on remaining memory space and the required memory amount of the first process.

For a process in which the memory management module determines the target memory reclaim manner, refer to S402. Details are not described herein again.

S504: The memory management module sends a memory reclaim notification to a memory reclaim module.

The memory reclaim notification may be used to indicate the target memory reclaim manner.

In an optional implementation, the memory management module may send the memory reclaim notification to the memory reclaim module by invoking a function. For different memory reclaim manners, the memory management module may send the memory reclaim notification to the memory reclaim module by invoking different functions. For example, the memory management module may invoke a try_to_free_pages function, to indicate to trigger a direct memory reclaim manner.

S505: The memory reclaim module initializes a memory reclaim parameter.

The initializing a memory reclaim parameter may be understood as assigning an initial value to each parameter in the memory reclaim parameter. For example, an initial value of a target to-be-reclaimed memory amount is the required memory amount of the first process.

In an optional implementation, the memory reclaim module may initialize the memory reclaim parameter by using a set_task_reclaim_state function.

S506: The memory reclaim module sends a notification for setting a memory reclaim manner to a memory reclaim optimization module.

The notification for setting the memory reclaim manner may be used to indicate the target memory reclaim manner.

S507: The memory reclaim optimization module sets a memory reclaim flag bit to a flag bit corresponding to the target memory reclaim manner.

In this embodiment of this application, the memory reclaim parameter may further include a memory reclaim flag. The memory reclaim optimization module may identify the memory reclaim manner by using the memory reclaim flag. The memory reclaim flag may be kswapd, direct reclaim, or others. If the memory reclaim flag is kswapd, it indicates that the memory reclaim manner is a kswapd memory reclaim manner. If the memory reclaim flag is direct reclaim, it indicates that the memory reclaim manner is the direct memory reclaim manner. If the memory reclaim flag is others, it indicates that the memory reclaim manner is another memory reclaim manner.

Therefore, if the target memory reclaim manner is the kswapd memory reclaim manner, the memory reclaim module may set the memory reclaim flag bit to a flag bit corresponding to the kswapd memory reclaim manner, that is, kswapd. If the target memory reclaim manner is the direct memory reclaim manner, the memory reclaim flag bit may be set to a flag bit corresponding to the direct memory reclaim manner, that is, direct reclaim. If the target memory reclaim manner is an OOM memory reclaim manner, the memory reclaim optimization module may set the memory reclaim flag bit to a flag bit corresponding to the OOM memory reclaim manner, that is, others.

S508: The memory reclaim optimization module sends a setting completion notification to the memory reclaim module.

The setting completion notification may be understood as a reply (reply) operation performed after the memory reclaim optimization module completes S507.

S509: The memory reclaim module sends a notification for updating the memory reclaim parameter to the memory reclaim optimization module.

S510: The memory reclaim optimization module sends a notification for optimizing the memory reclaim parameter to a decision center.

The notification for optimizing the memory reclaim parameter may be used to indicate the target memory reclaim manner (for example, the direct memory reclaim manner).

S511: The decision center determines a memory reclaim parameter based on system status information, process status information, and the target memory reclaim manner.

For a process in which the decision center determines the memory reclaim parameter, refer to S403. Details are not described herein again.

S512: The decision center sends the updated memory reclaim parameter to the memory reclaim optimization module.

S513: The memory reclaim optimization module overwrites the original memory reclaim parameter by using the updated memory reclaim parameter.

S514: The memory reclaim optimization module sends an update notification to the memory reclaim module.

The update notification indicates that the memory reclaim parameter is updated.

S515: The memory reclaim module performs memory reclaim based on the updated memory reclaim parameter, to obtain an actual reclaimed memory amount.

In an optional manner, the memory reclaim module may successively invoke do_try_to_free_pages, shrink_zones, shrink_nodes, and shrink_memcgs functions, to perform scanning in a sequence of a zone, a node, and a memcg, and in a scanning process, determine a memory reclaim parameter based on a dirty page write-back flag bit, a file page flag bit, and the like, and release a memory page.

It may be understood that after the kernel scans all memcg groups, one round of memory reclaim is completed. S515 may be understood as a process of one round of memory reclaim. In one memory reclaim procedure, the kernel may perform at least one round of memory reclaim. The actual reclaimed memory amount may be a total amount of memory reclaimed by the kernel in all rounds of memory reclaim.

S516: The memory reclaim module sends a notification for determining whether to continue to reclaim memory to the memory reclaim optimization module.

In this embodiment of this application, each time one round of memory reclaim is completed, the memory reclaim module may send the notification of determining whether to continue to reclaim memory to the memory reclaim optimization module.

S517: The memory reclaim optimization module obtains a first result based on a reclaim mode, the actual reclaimed memory amount, and the target to-be-reclaimed memory amount.

The first result may indicate to continue/not to continue to reclaim memory. In an optional implementation, a value of the first result may be true or false. If the value of the first result is true, it indicates to continue to reclaim memory. If the value of the first result is false, it indicates not to continue to reclaim memory.

If the reclaim mode is a first mode, and the actual reclaimed memory amount is greater than or equal to the target to-be-reclaimed memory amount, a first result indicating not to continue to reclaim memory is generated, for example, the value of the first result is set to false. If the reclaim mode is a second mode, or the actual reclaimed memory amount is less than the target to-be-reclaimed memory amount, a first result indicating to continue to reclaim memory is generated, for example, the value of the first result is set to true.

S518: The memory reclaim optimization module sends the first result to the memory reclaim module.

S519: The memory reclaim module determines, based on the first result and a first memory reclaim exit mechanism, whether to continue to reclaim memory.

If the first result indicates not to continue to reclaim memory, the memory reclaim module does not continue to reclaim memory, and performs S520. If the first result indicates to continue to reclaim memory, the memory reclaim module further determines, based on the first memory reclaim exit mechanism, whether to continue to reclaim memory. If the first memory reclaim exit mechanism is met, the memory reclaim module does not continue to perform memory reclaim, and performs S520. If the first memory reclaim exit mechanism is not met, the memory reclaim module continues to perform memory reclaim, and performs S515 again.

In an optional implementation, the memory reclaim module may implement the determining in S519 based on a continue_reclaim function.

S520: The memory reclaim module sends a memory reclaim completion notification to the memory management module.

S521: The memory management module allocates memory to the first process based on the required memory amount.

In an optional implementation, S506~S508, S509~S514, and S516~S518 may be implemented by using a hook (hook) mechanism. For example, when the target reclaim manner is the direct reclaim manner, a hook point 1 is added between the set_task_reclaim_state function and the do_try_to_free_pages function, to implement S506~S508, a hook point 2 is added between the do_try_to_free_pages function and the shrink_nodes function, to implement S509~S514, and a hook point 3 is added between the shrink_memcgs function and the continue_reclaim function, to implement S516~S518. Use of the hook mechanism may greatly reduce impact of improvement on an original memory reclaim procedure.

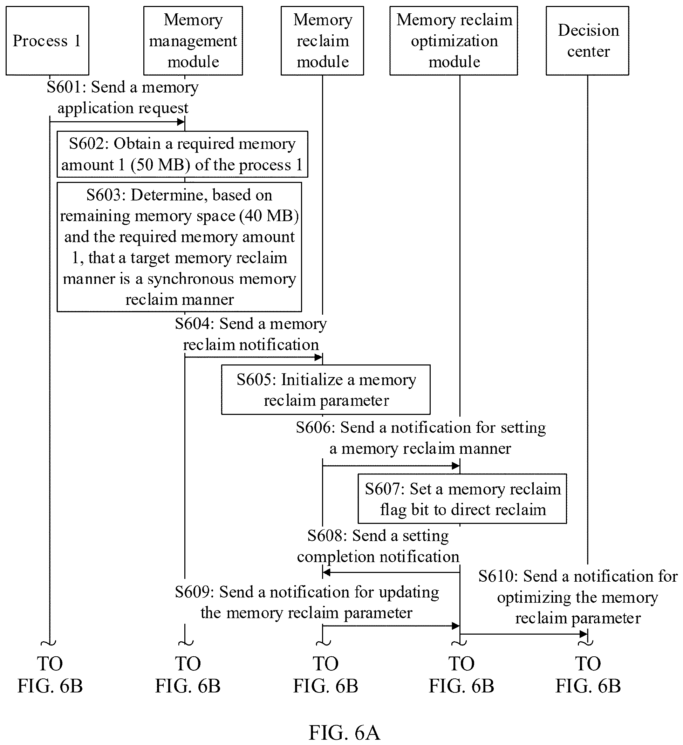

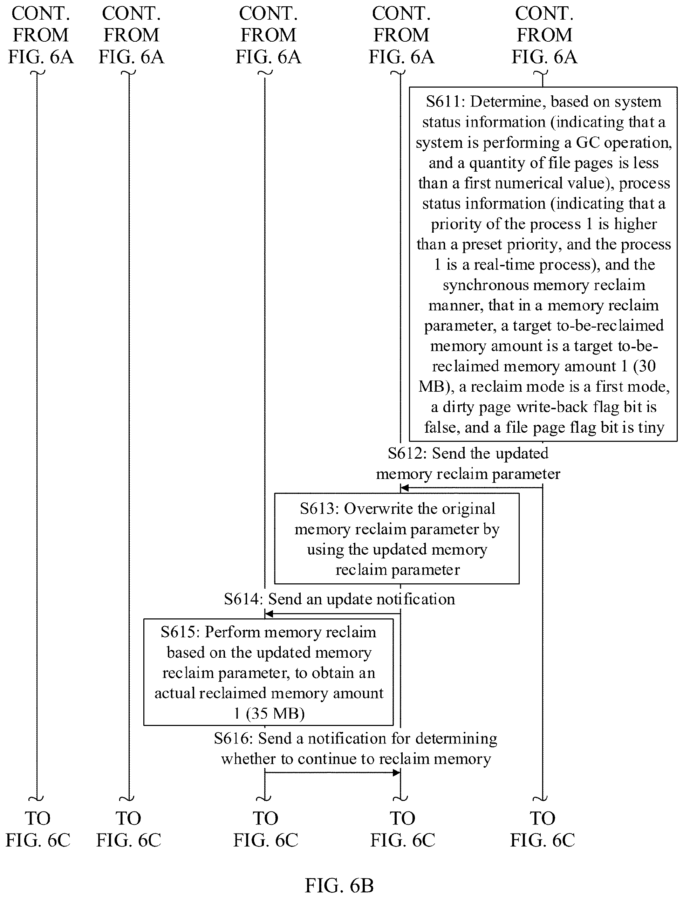

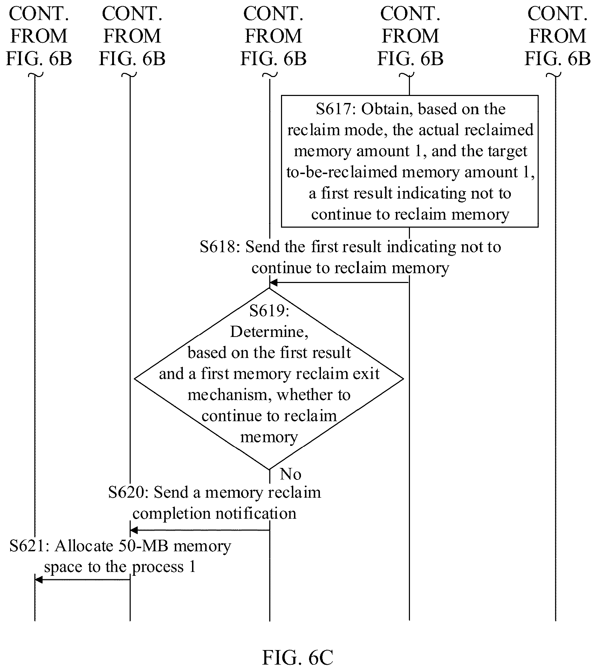

FIG. 6A, FIG. 6B, and FIG. 6C are a schematic flowchart 3 of a memory reclaim method according to an embodiment of this application. As shown in FIG. 6A, FIG. 6B, and FIG. 6C, the memory reclaim method provided in this embodiment of this application includes S601~S621.

S601: A process 1 sends a memory application request to a memory management module.

S602: The memory management module obtains a required memory amount 1 (50 MB) of the process 1.

In this embodiment of this application, a required memory amount of the process 1 is the required memory amount 1, for example, 50 MB.

S603: The memory management module determines, based on remaining memory space (40 MB) and the required memory amount 1, that a target memory reclaim manner is a synchronous memory reclaim manner.

In this embodiment of this application, the remaining memory space is 40 MB. Because the required memory amount 1 (50 MB) is greater than the remaining memory space (40 MB), the memory management module determines that the target memory reclaim manner is the synchronous memory reclaim manner.

S604: The memory management module sends a memory reclaim notification to a memory reclaim module.

S605: The memory reclaim module initializes a memory reclaim parameter.

S606: The memory reclaim module sends a notification for setting a memory reclaim manner to a memory reclaim optimization module.

S607: The memory reclaim optimization module sets a memory reclaim flag bit to direct reclaim.

In this embodiment of this application, the memory reclaim optimization module sets the memory reclaim flag bit to a flag bit corresponding to the synchronous memory reclaim manner, that is, direct reclaim.

S608: The memory reclaim optimization module sends a setting completion notification to the memory reclaim module.

S609: The memory reclaim module sends a notification for updating the memory reclaim parameter to the memory reclaim optimization module.

S610: The memory reclaim optimization module sends a notification for optimizing the memory reclaim parameter to a decision center.

S611: The decision center determines, based on system status information (indicating that a system is performing a GC operation, and a quantity of file pages is less than a first numerical value), process status information (indicating that a priority of the process 1 is higher than a preset priority, and the process 1 is a real-time process), and the synchronous memory reclaim manner, that in a memory reclaim parameter, a target to-be-reclaimed memory amount is a target to-be-reclaimed memory amount 1 (30 MB), a reclaim mode is a first mode, a dirty page write-back flag bit is false, and a file page flag bit is tiny.

In this embodiment of this application, the process status information indicates that the priority of the process 1 is higher than the preset priority, and the process 1 is a real-time process, and the system status information indicates that the system is performing a GC operation, and the quantity of file pages is less than the first numerical value, and memory reclaim is performed in the synchronous memory reclaim manner. In addition, a second memory amount is 30 MB.

Therefore, the decision center determines that in the memory reclaim parameter, the target to-be-reclaimed memory amount is a smaller value in the required memory amount 1 (namely, 50 MB) and the second memory amount (namely, 30 MB), that is, is 30 MB (that is, the target to-be-reclaimed memory amount 1 is 30 MB), the reclaim mode is the first mode, the dirty page write-back flag bit is false, and the file page flag bit is tiny.

S612: The decision center sends the updated memory reclaim parameter to the memory reclaim optimization module.

S613: The memory reclaim optimization module overwrites the original memory reclaim parameter by using the updated memory reclaim parameter.

S614: The memory reclaim optimization module sends an update notification to the memory reclaim module.

S615: The memory reclaim module performs memory reclaim based on the updated memory reclaim parameter, to obtain an actual reclaimed memory amount 1 (35 MB).

S616: The memory reclaim module sends a notification for determining whether to continue to reclaim memory to the memory reclaim optimization module.

S617: The memory reclaim optimization module obtains, based on the reclaim mode, the actual reclaimed memory amount 1, and the target to-be-reclaimed memory amount 1, a first result indicating not to continue to reclaim memory.

In this embodiment of this application, because the actual reclaimed memory amount 1 (namely, 35 MB)>the target to-be-reclaimed memory amount 1 (namely, 30 MB), and the reclaim mode is the first mode, the memory reclaim optimization module obtains the first result indicating not to continue to reclaim memory.

S618: The memory reclaim optimization module sends the first result indicating not to continue to reclaim memory to the memory reclaim module.

S619: The memory reclaim module determines, based on the first result and a first memory reclaim exit mechanism, whether to continue to reclaim memory.

Because the first result indicates not to continue to reclaim memory, the memory reclaim module does not continue to reclaim memory, and performs S620.

S620: The memory reclaim module sends a memory reclaim completion notification to the memory management module.

S621: The memory management module allocates 50-MB memory space to the process 1.

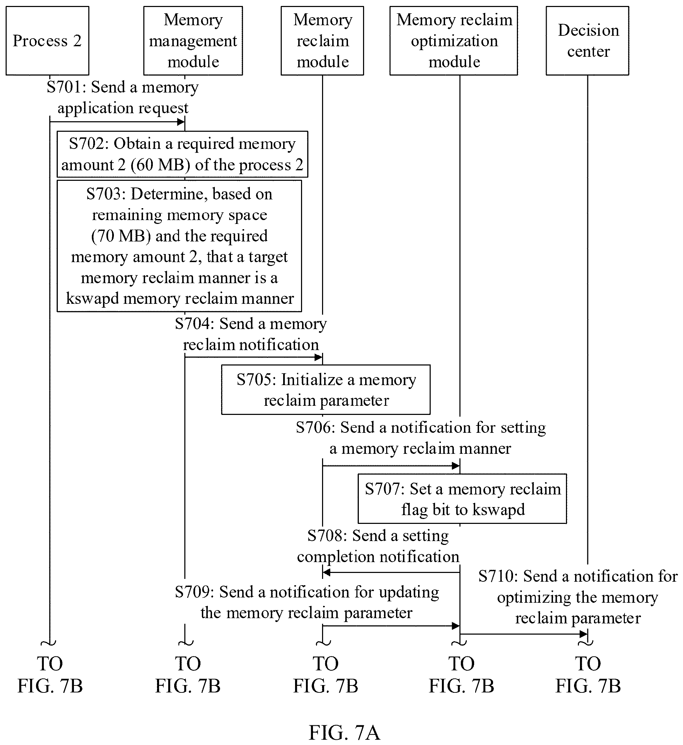

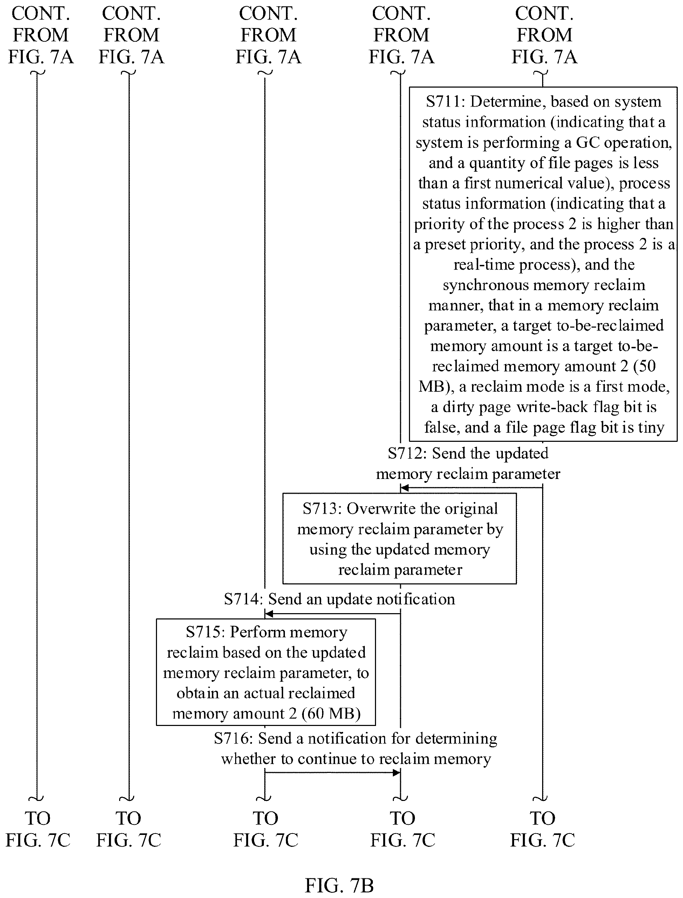

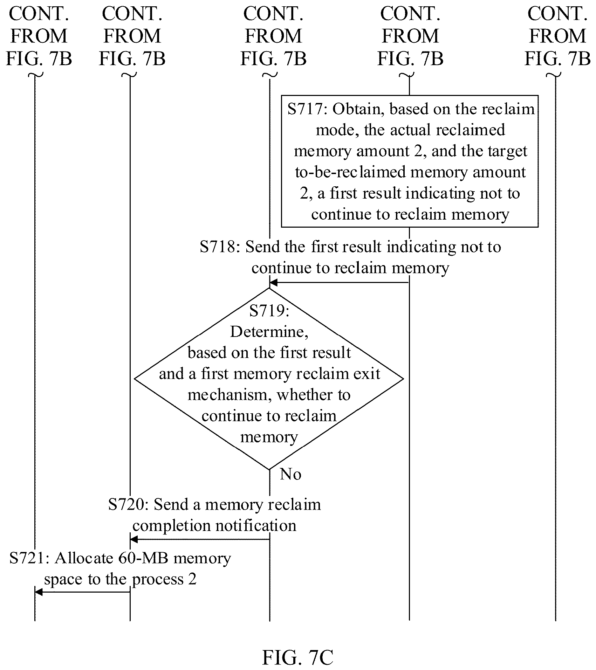

FIG. 7A, FIG. 7B, and FIG. 7C are a schematic flowchart 4 of a memory reclaim method according to an embodiment of this application. As shown in FIG. 7A, FIG. 7B, and FIG. 7C, the memory reclaim method provided in this embodiment of this application includes S701~S721.

S701: A process 2 sends a memory application request to a memory management module.

S702: The memory management module obtains a required memory amount 2 (60 MB) of the process 2.

In this embodiment of this application, a required memory amount of the process 2 is the required memory amount 2, for example, 60 MB.

S703: The memory management module determines, based on remaining memory space (70 MB) and the required memory amount 2, that a target memory reclaim manner is a kswapd memory reclaim manner.

In this embodiment of this application, the remaining memory space is 70 MB, a memory watermark min is 30 MB, and a memory watermark low is 100 MB. Because the memory watermark low (namely, 100 MB)>the remaining memory space (namely, 70 MB)>the memory watermark min (namely, 30 MB), the memory management module determines that the target memory reclaim manner is the kswapd memory reclaim manner.

S704: The memory management module sends a memory reclaim notification to a memory reclaim module.

S705: The memory reclaim module initializes a memory reclaim parameter.

S706: The memory reclaim module sends a notification for setting a memory reclaim manner to a memory reclaim optimization module.

S707: The memory reclaim optimization module sets a memory reclaim flag bit to kswapd.

In this embodiment of this application, the memory reclaim optimization module sets the memory reclaim flag bit to a flag bit corresponding to the kswapd memory reclaim manner, that is, kswapd.

S708: The memory reclaim optimization module sends a setting completion notification to the memory reclaim module.

S709: The memory reclaim module sends a notification for updating the memory reclaim parameter to the memory reclaim optimization module.

S710: The memory reclaim optimization module sends a notification for optimizing the memory reclaim parameter to a decision center.

S711: The decision center determines, based on system status information (indicating that a system is performing a GC operation, and a quantity of file pages is less than a first numerical value), process status information (indicating that a priority of the process 2 is higher than a preset priority, and the process 2 is a real-time process), and the synchronous memory reclaim manner, that in a memory reclaim parameter, a target to-be-reclaimed memory amount is a target to-be-reclaimed memory amount 2 (50 MB), a reclaim mode is a first mode, a dirty page write-back flag bit is false, and a file page flag bit is tiny.

In this embodiment of this application, the process status information indicates that the priority of the process 2 is higher than the preset priority, and the process 2 is a real-time process, and the system status information indicates that the system is performing a GC operation, and the quantity of file pages is less than the first numerical value, and memory reclaim is performed in the synchronous memory reclaim manner. In addition, a sixth memory amount is 50 MB.

Therefore, the decision center determines that in the memory reclaim parameter, the target to-be-reclaimed memory amount is a smaller value in the required memory amount 2 (60 MB) and the sixth memory amount (50 MB), that is, is 50 MB (that is, the target to-be-reclaimed memory amount 2 is 50 MB), the reclaim mode is the first mode, the dirty page write-back flag bit is false, and the file page flag bit is tiny.

S712: The decision center sends the updated memory reclaim parameter to the memory reclaim optimization module.

S713: The memory reclaim optimization module overwrites the original memory reclaim parameter by using the updated memory reclaim parameter.

S714: The memory reclaim optimization module sends an update notification to the memory reclaim module.

S715: The memory reclaim module performs memory reclaim based on the updated memory reclaim parameter, to obtain an actual reclaimed memory amount 2 (60 MB).

S716: The memory reclaim module sends a notification for determining whether to continue to reclaim memory to the memory reclaim optimization module.

S717: The memory reclaim optimization module obtains, based on the reclaim mode, the actual reclaimed memory amount 2, and the target to-be-reclaimed memory amount 2, a first result indicating not to continue to reclaim memory.

In this embodiment of this application, because the actual reclaimed memory amount 2 (namely, 60 MB)>the target to-be-reclaimed memory amount 2 (namely, 50 MB), and the reclaim mode is the first mode, the memory reclaim optimization module obtains the first result indicating not to continue to reclaim memory.

S718: The memory reclaim optimization module sends the first result indicating not to continue to reclaim memory to the memory reclaim module.

S719: The memory reclaim module determines, based on the first result and a first memory reclaim exit mechanism, whether to continue to reclaim memory.

Because the first result indicates not to continue to reclaim memory, the memory reclaim module does not continue to reclaim memory, and performs S720.

S720: The memory reclaim module sends a memory reclaim completion notification to the memory management module.

S721: The memory management module allocates 60-MB memory space to the process 2.

It may be learned from comparison between FIG. 6A, FIG. 6B, and FIG. 6C and FIG. 7A, FIG. 7B, and FIG. 7C that for a memory requirement of the process 1, the kernel uses the synchronous memory reclaim manner, and the target to-be-reclaimed memory amount is the target to-be-reclaimed memory amount 1 (30 MB); and for a memory requirement of the process 2, the kernel uses the kswapd memory reclaim manner, the target to-be-reclaimed memory amount is the target to-be-reclaimed memory amount 2 (50 MB), and memory pressure corresponding to the memory reclaim manner corresponding to the process 1 is higher than memory pressure corresponding to the memory reclaim manner corresponding to the process 2. It may be learned that when urgency of processes is the same and different memory reclaim manners are used, higher memory pressure corresponding to the memory reclaim manner indicates a smaller target to-be-reclaimed memory amount.

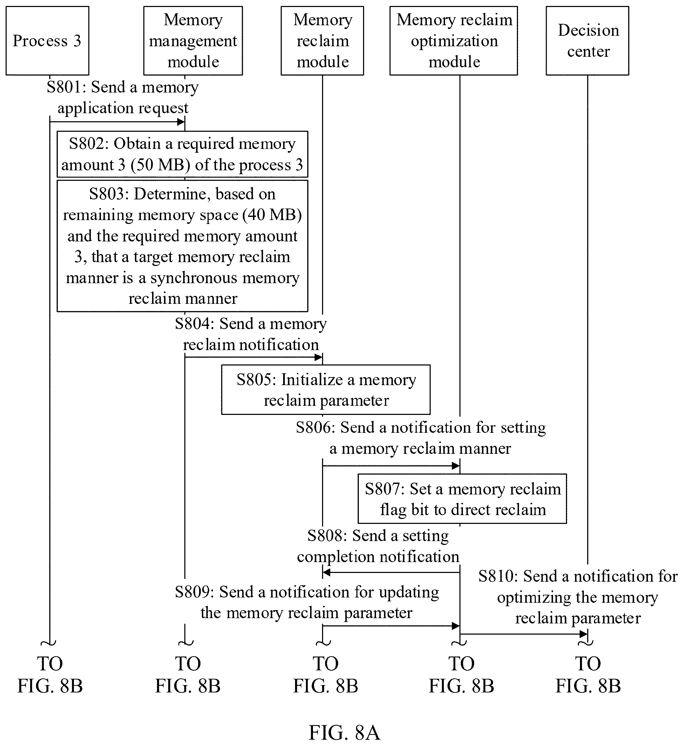

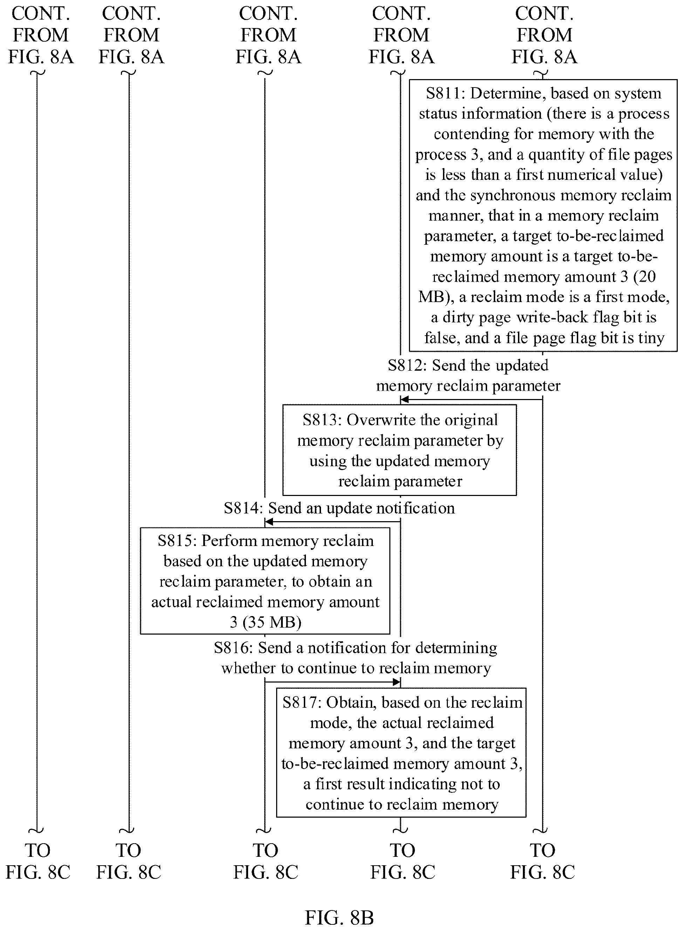

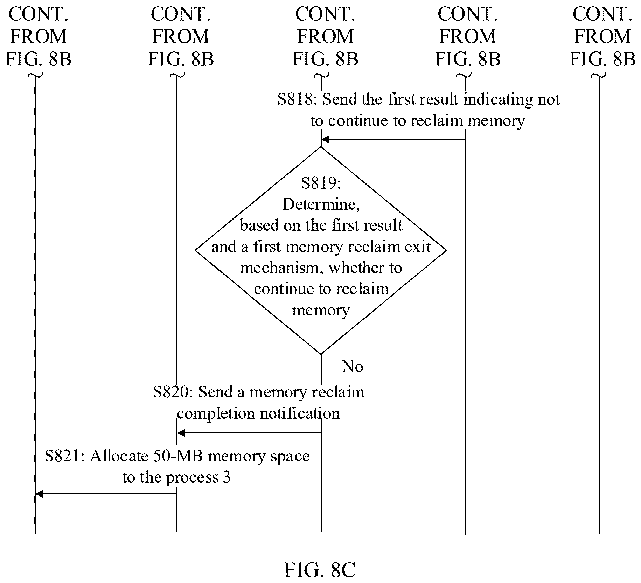

FIG. 8A, FIG. 8B, and FIG. 8C are a schematic flowchart 5 of a memory reclaim method according to an embodiment of this application. As shown in FIG. 8A, FIG. 8B, and FIG. 8C, the memory reclaim method provided in this embodiment of this application includes S801~S821.

S801: A process 3 sends a memory application request to a memory management module.

S802: The memory management module obtains a required memory amount 3 (50 MB) of the process 3.

In this embodiment of this application, a required memory amount of the process 3 is the required memory amount 3, for example, 50 MB.

S803: The memory management module determines, based on remaining memory space (40 MB) and the required memory amount 3, that a target memory reclaim manner is a synchronous memory reclaim manner.

In this embodiment of this application, the remaining memory space is 40 MB. Because the required memory amount 3 (50 MB) is greater than the remaining memory space (40 MB), the memory management module determines that the target memory reclaim manner is the synchronous memory reclaim manner.

S804: The memory management module sends a memory reclaim notification to a memory reclaim module.

S805: The memory reclaim module initializes a memory reclaim parameter.

S806: The memory reclaim module sends a notification for setting a memory reclaim manner to a memory reclaim optimization module.

S807: The memory reclaim optimization module sets a memory reclaim flag bit to direct reclaim.

In this embodiment of this application, the memory reclaim optimization module sets the memory reclaim flag bit to a flag bit corresponding to the synchronous memory reclaim manner, that is, direct reclaim.

S808: The memory reclaim optimization module sends a setting completion notification to the memory reclaim module.

S809: The memory reclaim module sends a notification for updating the memory reclaim parameter to the memory reclaim optimization module.

S810: The memory reclaim optimization module sends a notification for optimizing the memory reclaim parameter to a decision center.

S811: The decision center determines, based on system status information (indicating that there is a process contending for memory with the process 3, and a quantity of file pages is less than a first numerical value) and the synchronous memory reclaim manner, that in a memory reclaim parameter, a target to-be-reclaimed memory amount is a target to-be-reclaimed memory amount 3 (20 MB), a reclaim mode is a first mode, a dirty page write-back flag bit is false, and a file page flag bit is tiny.

In this embodiment of this application, the system status information indicates that there is a process contending for memory with the process 3, and the quantity of file pages is less than the first numerical value, and memory reclaim is performed in the synchronous memory reclaim manner. In addition, a first memory amount is 20 MB.

Therefore, the decision center determines that in the memory reclaim parameter, the target to-be-reclaimed memory amount is a smaller value in the required memory amount 3 (namely, 50 MB) and the first memory amount (namely, 20 MB), that is, is 20 MB (that is, the target to-be-reclaimed memory amount 3 is 20 MB), the reclaim mode is the first mode, the dirty page write-back flag bit is false, and the file page flag bit is tiny.

S812: The decision center sends the updated memory reclaim parameter to the memory reclaim optimization module.

S813: The memory reclaim optimization module overwrites the original memory reclaim parameter by using the updated memory reclaim parameter.

S814: The memory reclaim optimization module sends an update notification to the memory reclaim module.

S815: The memory reclaim module performs memory reclaim based on the updated memory reclaim parameter, to obtain an actual reclaimed memory amount 3 (35 MB).

S816: The memory reclaim module sends a notification for determining whether to continue to reclaim memory to the memory reclaim optimization module.

S817: The memory reclaim optimization module obtains, based on the reclaim mode, the actual reclaimed memory amount 3, and the target to-be-reclaimed memory amount 3, a first result indicating not to continue to reclaim memory.

In this embodiment of this application, because the actual reclaimed memory amount 3 (namely, 35 MB)>the target to-be-reclaimed memory amount 3 (namely, 20 MB), and the reclaim mode is the first mode, the memory reclaim optimization module obtains the first result indicating not to continue to reclaim memory.

S818: The memory reclaim optimization module sends the first result indicating not to continue to reclaim memory to the memory reclaim module.

S819: The memory reclaim module determines, based on the first result and a first memory reclaim exit mechanism, whether to continue to reclaim memory.

Because the first result indicates not to continue to reclaim memory, the memory reclaim module does not continue to reclaim memory, and performs S820.

S820: The memory reclaim module sends a memory reclaim completion notification to the memory management module.

S821: The memory management module allocates 50-MB memory space to the process 3.

It may be learned from comparison between FIG. 6A, FIG. 6B, and FIG. 6C and FIG. 8A, FIG. 8B, and FIG. 8C that for memory application of the process 1, the kernel uses the synchronous memory reclaim manner, and the target to-be-reclaimed memory amount is the target to-be-reclaimed memory amount 1 (30 MB); and for a memory requirement of the process 3, the kernel uses the synchronous memory reclaim manner, the target to-be-reclaimed memory amount is the target to-be-reclaimed memory amount 3 (20 MB), and urgency of the process 1 is lower than urgency of the process 3. It may be learned that when a same memory reclaim manner is used and urgency of processes is the same, higher urgency of the process indicates a smaller target to-be-reclaimed memory amount.

In conclusion, in this application, different target to-be-reclaimed memory amounts are adaptively set for different types of memory reclaim manners, and there is corresponding different memory reclaim efficiency. A memory supply time is reduced to alleviate an application lag effect caused due to slow memory supply.

An embodiment of this application further provides a chip system. The chip system includes at least one processor and at least one interface circuit. The processor and the interface circuit may be interconnected through a line. For example, the interface circuit may be configured to receive a signal from another apparatus (for example, a storage of an electronic device). For another example, the interface circuit may be configured to send a signal to another apparatus (for example, a processor). For example, the interface circuit may read instructions stored in the storage and send the instructions to the processor. When the instructions are executed by the processor, the electronic device or a server may be enabled to perform the steps in the foregoing embodiments. Certainly, the chip system may further include other discrete components. This is not specifically limited in embodiments of this application.

An embodiment further provides a computer-readable storage medium. The computer-readable storage medium stores computer instructions. When the computer instructions are run on an electronic device, the electronic device is enabled to perform the functions or steps in the foregoing method embodiments.

An embodiment further provides a computer program product. When the computer program product runs on an electronic device, the electronic device is enabled to perform the functions or steps in the foregoing method embodiments.

In addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, to enable the chip to perform the functions or steps performed by the mobile phone in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects in the corresponding method provided above. Details are not described herein again.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separate, and components displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps in the methods in the embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions in this application, but are not intended to limit this application. Although this application is described in detail with reference to the example embodiments, a person of ordinary skill in the art should understand that modifications or equivalent replacements may be made to the technical solutions in this application without departing from the spirit and scope of the technical solutions in this application.

## Claims

1. A memory reclaim method, applied to an electronic device, wherein the method comprises:
reclaiming memory in a first memory reclaim manner based on a first memory reclaim parameter in response to a first event that triggers a first process to apply for memory; and
reclaiming memory in a second memory reclaim manner based on a second memory reclaim parameter in response to a second event that triggers a second process to apply for memory, wherein
the first memory reclaim parameter comprises a first target to-be-reclaimed memory amount, and the second memory reclaim parameter comprises a second target to-be-reclaimed memory amount; and
when urgency of the first process is the same as urgency of the second process, and memory pressure corresponding to the first memory reclaim manner is higher than memory pressure corresponding to the second memory reclaim manner, the first target to-be-reclaimed memory amount is less than the second target to-be-reclaimed memory amount; or
when urgency of the first process is higher than urgency of the second process, and the first memory reclaim manner is the same as the second memory reclaim manner, the first target to-be-reclaimed memory amount is less than the second target to-be-reclaimed memory amount.

2. The method according to claim 1, wherein the urgency of the first process is determined based on system status information and process status information, the system status information is used to indicate memory pressure, and the process status information is used to indicate a degree to which the first process affects user experience;
the system status information comprises at least one of information indicating whether the electronic device is performing garbage collection and information indicating whether there is a process contending for memory with the first process; and
the process status information comprises at least one of a priority of the first process, whether the first process is a real-time process, and a type of the first process, the type of the first process comprises a foreground process, a background process, and a foreground-related process, and the foreground-related process is a process that supports foreground process running.

3. The method according to claim 2, wherein
when the system status information and the process status information meet a first condition, the target required memory amount is a first target required memory amount, and the first target required memory amount is less than or equal to a required memory amount of the first process;
when the system status information and the process status information meet a second condition, the target required memory amount is a second target required memory amount, and the second target required memory amount is equal to a required memory amount of the first process; or
when the system status information and the process status information meet a third condition, the target required memory amount is a third target required memory amount, and the third target required memory amount is greater than or equal to a required memory amount of the first process, wherein
urgency of the first process when the system status information and the process status information meet the first condition is higher than urgency of the first process when the system status information and the process status information meet the second condition, and the urgency of the first process when the system status information and the process status information meet the second condition is higher than urgency of the first process when the system status information and the process status information meet the third condition.

4. The method according to claim 3, wherein the first condition comprises:
there is a process contending for memory with the first process; or
the electronic device is performing garbage collection, the priority of the first process is higher than a preset priority, and the first process is a real-time process; or
the first process is a foreground process, and the first process is a real-time process.

5. The method according to claim 3, wherein the second condition comprises:
the electronic device is performing garbage collection, the priority of the first process is higher than a preset priority, and the first process is not a real-time process; or
the first process is a foreground process, and the first process is not a real-time process.

6. The method according to claim 3, wherein the third condition comprises:
the first process is a foreground-related process or a background process.

7. The method according to any one of claims 2-6, wherein the memory reclaim parameter further comprises a dirty page write-back flag bit; and
when the system status information and the process status information meet a fourth condition, the dirty page write-back flag bit is a first value, wherein when the dirty page write-back flag bit is the first value, it indicates that no dirty page write-back operation is performed in a memory reclaim process, wherein
the fourth condition comprises:
there is a process contending for memory with the first process; or
the electronic device is performing garbage collection, and the priority of the first process is higher than the preset priority; or
the first process is a foreground process.

8. The method according to any one of claims 2-7, wherein the memory reclaim parameter further comprises a reclaim mode; and
when the system status information and the process status information meet a fifth condition, the reclaim mode is a first mode, wherein when the reclaim mode is the first mode, the electronic device does not continue to reclaim memory when an actual reclaimed memory amount is greater than or equal to the target to-be-reclaimed memory amount, wherein
the fifth condition comprises:
there is a process contending for memory with the first process; or
the electronic device is performing garbage collection, and the priority of the first process is higher than the preset priority.

9. The method according to any one of claims 1-8, wherein the system status information comprises a quantity of file pages, and the memory reclaim parameter further comprises a file page flag bit; and
when the quantity of file pages is less than or equal to a first numerical value, the file page flag bit is a second value, wherein when the file page flag bit is the second value, it indicates that an anonymous page is preferentially reclaimed in the memory reclaim process.

10. The method according to any one of claims 1-9, wherein the reclaiming memory in a first memory reclaim manner based on a first memory reclaim parameter in response to a first event that triggers a first process to apply for memory comprises:
obtaining the required memory amount of the first process in response to the first event that triggers the first process to apply for memory;
determining the first memory reclaim manner from a plurality of memory reclaim manners based on the required memory amount of the first process and remaining memory space, wherein the plurality of memory reclaim manners correspond to different memory pressure; and
reclaiming memory in the first memory reclaim manner based on the first memory reclaim parameter.

11. A memory reclaim method, applied to an electronic device, wherein the method comprises:
obtaining a required memory amount of a first process;
determining a target memory reclaim manner from a plurality of memory reclaim manners based on remaining memory space and the required memory amount of the first process, wherein the plurality of memory reclaim manners correspond to different memory pressure; and
reclaiming memory in the target memory reclaim manner based on a memory reclaim parameter, wherein the memory reclaim parameter comprises a target to-be-reclaimed memory amount, higher memory pressure corresponding to the target memory reclaim manner indicates a smaller target to-be-reclaimed memory amount, and higher urgency of the first process indicates a smaller target to-be-reclaimed memory amount.

12. The method according to claim 11, wherein the urgency of the first process is determined based on system status information and process status information, the system status information is used to indicate memory pressure, and the process status information is used to indicate a degree to which the first process affects user experience;
the system status information comprises at least one of information indicating whether a system is performing garbage collection and information indicating whether there is a process contending for memory with the first process; and
the process status information comprises at least one of a priority of the first process, whether the first process is a real-time process, and a type of the first process, the type of the first process comprises a foreground process, a background process, and a foreground-related process, and the foreground-related process is a process that supports foreground process running.

13. An electronic device, wherein the electronic device comprises a storage and a processor, the processor is coupled to the storage, the storage is configured to store computer program code, the computer program code comprises computer instructions, and when the computer instructions are executed by the processor, the electronic device is enabled to perform the method according to any one of claims 1-12.

14. A computer-readable storage medium, comprising computer instructions, wherein when the computer instructions are run on an electronic device, the electronic device is enabled to perform the method according to any one of claims 1-12.
